# FASCICULE DE BREVET EUROPEEN

(11) **EP 3 359 499 B1**
(45) Date de publication et mention de la délivrance du brevet: **04.09.2024**
(21) Numéro de dépôt: 16790670.0
(22) Date de dépôt: 06.10.2016
(51) Int. Cl.: C03C 13/06, C03B 37/04, C03B 5/235, D04H 1/4218, D01D 1/04, C03C 3/097, D01F 9/08

(54) **FIBRES MINERALES**
MINERALFASERN
MINERAL FIBRES

(30) Priorité: 08.10.2015 FR 1559582
(43) Date de publication de la demande: 15.08.2018
(60) Demande divisionnaire: 24190548.8
(73) Titulaire: SAINT-GOBAIN ISOVER, 92400 Courbevoie (FR)
(72) Inventeur: ELLISON, Christopher, 76119 Varengeville Sur Mer (FR)
(74) Mandataire: Saint-Gobain Recherche
(86) Numéro de dépôt international: PCT/FR2016/052582
(87) Numéro de publication internationale: WO 2017/060637

(56) Documents cités:
- WO-A1-99/56525
- GB-A- 2 152 026
- US-A- 3 929 497
- US-A1- 2007 292 303
- US-A1- 2014 357 469
- DATABASE WPI Week 200610, 19 January 2005 Derwent World Patents Index; AN 2006-090967, XP002759312

## Description

La présente invention concerne le domaine des fibres minérales artificielles. Elle vise plus particulièrement les fibres minérales destinées à fabriquer des matériaux d'isolation thermique et/ou acoustique. Elle s'intéresse plus particulièrement aux fibres minérales vitreuses du type fibres de roche.

Pour certaines applications d'isolation, les fibres minérales peuvent rester visibles. C'est le cas par exemple des laines à projeter, appliquées sous forme d'un mélange de fibres minérales et d'un ou plusieurs liants, utilisées notamment pour l'isolation thermique et acoustique des planchers bas sur locaux non chauffés tels que les parkings souterrains. Pour de telles applications, il est d'usage que les fibres minérales présentent une faible et uniforme coloration afin de garantir les qualités esthétiques des laines à projeter.

Les fibres minérales des laines de laitier sont, comme leur nom l'indique, obtenues à partir de matières premières en grande partie constituées de laitiers de haut-fourneau. Elles comprennent par conséquent une faible teneur en fer, typiquement moins de 1 %, et une quantité élevée de chaux. Cette forte proportion de laitiers permet d'obtenir des fibres très peu colorées. Les laines de laitier sont donc largement utilisées pour les applications pour lesquelles les fibres minérales peuvent rester visibles, telles que les laines à projeter. Néanmoins, l'utilisation de grandes quantités de laitiers provoque des envols comprenant des émissions de SOₓ lors de l'étape de fusion des matières premières. Ces envols doivent être traités afin de garantir l'innocuité sanitaire et/ou environnementale des rejets industriels, ce qui engendre un surcoût de production.

Par ailleurs, le caractère biosoluble est, comme pour toutes fibres minérales artificielles, un critère important pour le choix des fibres minérales utilisées pour les laines à projeter. Les fibres minérales doivent pouvoir se dissoudre rapidement dans un milieu physiologique afin de prévenir tout risque pathogène potentiel lié à l'accumulation éventuelle des fibres les plus fines dans l'organisme par inhalation.

L'amélioration des propriétés de résistance au feu est également un critère important dans le contexte de l'isolation thermique et/ou acoustique des bâtiments qui est soumis à des réglementations toujours plus exigeantes. Il est connu d'augmenter la teneur en fer dans les compositions de fibres minérales pour améliorer leurs propriétés de résistance au feu. Or, l'augmentation des teneurs en fer a tendance à colorer les fibres minérales, ce qui n'est pas souhaité en particulier pour les applications pour lesquelles les fibres minérales restent visibles.

GB2152026 A divulgue une composition de fibres minérales comprenant, en pourcentage en poids, après conversion de FeO en Fe₂O₃, et normalisation : 40,3% SiO₂ ; 14,5% Al₂O₃ ; 14,0% fer total exprimé en Fe₂O₃ ; 18,0% CaO ; 6,7% MgO ; 3,3% Na₂O+K₂O ; 0,2% MnO ; 3,0% TiO₂ ; 0,1% SO₃, redox=415.

US2007292303 A1 se rapport à un alliage pour assiette de fibrage par centrifugation. Le verre alimentant l'assiette de fibrage présente un ratio molaire FeO/(FeO+Fe₂O₃) de 0,1 à 0,3 permettant de maintenir l'oxydation du chrome de l'assiette.

La présente invention propose d'améliorer la résistance au feu de fibres minérales pouvant être utilisées pour former des produits de laine minérale, notamment mais non limitativement dans des applications en laines à projeter, tout en limitant la coloration de celles-ci. La Demanderesse a remarqué qu'il était possible de parvenir à ce compromis en contrôlant le degré d'oxydo-réduction des fibres minérales. Un autre objet de la présente invention est de proposer des fibres minérales ayant de bonnes propriétés de biosolubilité. Un autre objet de la présente invention est de minimiser les émissions de SOₓ lors de la fabrication des fibres minérales.
Ainsi, la présente invention concerne des fibres minérales selon la revendication 1

Dans l'intégralité du présent texte, les teneurs sont exprimées en pourcentages pondéraux.

La teneur en silice (SiO2) est avantageusement comprise dans un domaine allant de 35 à 45 %, plus particulièrement de 38 à 44%.

La teneur en alumine (Al₂O₃) est avantageusement comprise dans un domaine allant de 13 à 17 %.

La teneur en chaux (CaO) est de préférence comprise dans un domaine allant de 5, voire 10, 12 ou 15 % à 25, voire 20, ou 18 %, notamment de 10 à 20 % ou de 12 à 18 %. La teneur en magnésie (MgO) est de préférence comprise dans un domaine allant de 5, voire 7, 7,5 ou 8 % à 25, voire 20, 15 ou 13 %, notamment de 5 à 15 %, de 7,5 à 15 % ou de 8 à 13 %. La somme des teneurs en chaux et magnésie est quant à elle de préférence comprise dans un domaine allant de 27,5 % à 33, voire 32 ou 31 %, notamment de 27,5 à 32 % ou de 27,5 à 31 %.

De préférence, la teneur en oxyde de baryum (BaO) est d'au plus 1 %, notamment 0,5 %, voire 0,1 %. La teneur en oxyde de manganèse (MnO) est d'au plus 1 %, notamment comprise dans un domaine allant de 0,05 à 0,5 %, voire 0,1 à 0,3 %. La teneur en oxyde de strontium (SrO) est quant à elle de préférence d'au plus 1%, voire 0,5% et même 0,1% ou encore nulle.

La teneur totale en oxydes alcalins (soude et potasse -Na₂O+K₂O) est de préférence comprise dans un domaine allant de 2, voire 3,5 % à 6, voire 5 %. La teneur en Na₂O est avantageusement d'au plus 6 %, notamment comprise dans un domaine allant de 0,1, voire 1 % à 5, voire 4 %. La teneur en K₂O est quant à elle avantageusement d'au plus 6 %, notamment comprise dans un domaine allant de 0,1, voire 0,5 à 5, voire 3 %. La laine minérale ne comprend de préférence pas d'autre oxyde alcalin que Na₂O et K₂O. Elle peut néanmoins contenir de faibles quantités de Li₂O, parfois présent en tant qu'impuretés dans certains feldspaths.

L'oxyde de titane (TiO₂) procure un effet très sensible sur la nucléation à haute et à basse température de spinelles dans la matrice vitreuse. La teneur en TiO₂ est de préférence comprise dans un domaine allant de 0,1 à 3 %, notamment de 0,5 à 2,5 %.

L'oxyde de fer (Fe₂O₃) a un impact positif sur la résistance au feu des fibres minérales. Sa teneur totale (exprimée sous la forme Fe₂O₃, que le fer soit sous forme ferrique ou ferreuse) est de préférence d'au moins 7 %, voire 8 % et/ou d'au plus 12 %. Le redox, qui correspond au rapport pondéral entre la teneur en fer ferreux (Fe²⁺), exprimée en Fe₂O₃, et la teneur totale en fer, exprimée en Fe₂O₃, est de préférence compris dans un domaine allant de 0,1 à 0,5. Le rapport pondéral de la teneur en fer ferrique (Fe³⁺), exprimée en Fe₂O₃, par rapport à la teneur en fer total, exprimée en Fe₂O₃, est de préférence supérieure à 0,4, notamment supérieure à 0,5, voire supérieure à 0,6. Un des avantages supplémentaire du bas redox est d'éviter la formation de fonte dans la cuve de fusion, ce qui permet d'améliorer les conditions de sécurité et l'efficacité du procédé. Les opérations de vidage de la cuve de fusion, nécessaires lorsque le procédé produit de la fonte, sont en effet dangereuses et nécessitent l'arrêt de la production.

La composition de la laine minérale selon l'invention peut également contenir du P₂O₅, notamment à des teneurs comprises entre 0 et 3 %, voire entre 0 et 1,2 % pour augmenter la biosolubilité à pH neutre.

Quelques combinaisons préférées sont décrites ci-après.

Selon un mode de réalisation préféré, les fibres minérales selon l'invention présentent une composition chimique comprenant les constituants suivants, en pourcentages pondéraux :

| | |
|---|---|
| SiO₂ | 35 à 45 % |
| Al₂O₃ | 13 à 17 % |
| CaO+MgO | 27,5 à 33% |
| Na₂O+K₂O | 1 à 6 %, de préférence 3,5 à 6% |
| TiO₂ | 0,1 à 3 % |

caractérisées en ce que lesdites fibres minérales comprennent une teneur en fer total, exprimée en Fe₂O₃, de 7 à 12 % et un redox inférieur à 0,6, de préférence inférieur à 0,5, plus préférentiellement inférieur à 0,4.

Ce domaine est particulièrement préféré car il englobe des compositions biosolubles selon la selon la directive européenne 97/67/EC.

Selon un mode de réalisation particulièrement préféré, les fibres minérales selon l'invention présentent une composition chimique comprenant les constituants suivants, en pourcentages pondéraux :

| | |
|---|---|
| SiO₂ | 38 à 44 % |
| Al₂O₃ | 13 à 17 % |
| CaO+MgO | 27,5 à 31% |
| Na₂O+K₂O | 2 à 6 %, de préférence 3,5 à 6% |
| TiO₂ | 0,5 à 2,5 % |

caractérisées en ce que lesdites fibres minérales comprennent une teneur en fer total, exprimée en Fe₂O₃, de 8 à 12 % et un redox inférieur à 0,6, de préférence inférieur à 0,5, plus préférentiellement inférieur à 0,4.

L'invention a également pour objet un procédé d'obtention de fibres minérales selon l'invention, comprenant une étape de fusion d'un mélange vitrifiable possédant sensiblement la même composition chimique que celle desdites fibres minérales ; puis une étape de fibrage, notamment par un procédé de centrifugation externe.

L'étape de fusion permet d'obtenir un bain fondu à partir d'un mélange vitrifiable comprenant une portion majoritaire de roches, par exemple plus de 60 %, en particulier plus de 70 %, voire plus de 80 % ou plus de 90 %. Les roches peuvent choisies par exemple parmi le basalte, le feldspath, la diabase, la péridotite, la pyroxénite, l'apatite, la bauxite, la dolomite, les minerais de fer, le calcaire, le rutile, la magnésite, la magnétite et la brucite en fonction de la composition souhaitée.

Le mélange vitrifiable peut comprendre une proportion minoritaire de laitiers, par exemple moins de 40 %, en particulier moins de 30 %, voire moins de 20 % ou moins de 10 %. Il est avantageusement dépourvu de laitier afin d'éviter les émissions de gaz résiduaires indésirables lors de la fusion de la matière vitrifiable.

La fusion des matières premières à base de roche servant à la fabrication des fibres minérales se fait traditionnellement dans des fours de type cubilot chauffés au coke. Ces conditions de fusion créent un environnement réducteur. La Demanderesse a remarqué qu'au contraire, la fusion de mélanges vitrifiables à base de roches dans des conditions oxydantes (c'est-à-dire de manière à ce que le redox du bain fondu soit inférieur à 0,6) permet l'obtention de fibre minérales peu colorées malgré la présence d'une quantité relativement importante de fer dans le mélange.

L'étape de fusion peut être réalisée de différentes manières connues, notamment par fusion dans un four à flammes ou par fusion électrique.

Dans un four électrique, le mélange vitrifiable est fondu par effet Joule, au moyen d'électrodes immergées dans le bain fondu, à l'exclusion de toute utilisation d'autres moyens de chauffage, tels que des flammes. Les électrodes peuvent être suspendues de manière à plonger dans le bain fondu par le dessus ou encore être installées dans les parois latérales de la cuve. La première option est généralement préférée pour les cuves de grandes dimensions afin de répartir au mieux le chauffage du bain de verre. Les électrodes sont de préférence en molybdène, voire éventuellement en oxyde d'étain.

Les fours à flammes comprennent au moins un brûleur, aérien ou immergé. Dans un four à brûleurs aériens, les flammes sont disposées au-dessus du bain fondu et le chauffent par rayonnement. Dans un four à brûleurs immergés, les flammes sont créées directement au sein du bain fondu, ce qui permet un échange d'énergie plus efficace. Le ou chaque brûleur est alimenté par un mélange air/combustible ou oxygène combustible, divers combustibles pouvant être utilisés tels que le gaz naturel ou le fioul.

L'étape de fusion peut également mettre en oeuvre à la fois une fusion flammes et une fusion électrique, par exemple en employant un four à flammes également muni d'électrodes en parois latérales servant à accélérer la fusion du mélange vitrifiable.

Les fours cités ci-dessus permettent de créer des conditions de fusion plus ou moins oxydantes. Il est cependant possible, si nécessaire, d'ajuster le redox du bain fondu. Le procédé fait intervenir la fusion en continu d'une composition comprenant le mélange vitrifiable de préférence dans un four à brûleurs immergés. Des fours à brûleur immergés adaptés à la présente invention sont par exemple décrits dans les demandes WO 2013/186480, WO 2013/132184 et WO 2013/117851. Les brûleurs immergés ont la double fonction de chauffer les matières vitrifiables et d'homogénéiser la composition. Les matières premières peuvent être broyées ou micronisées avant leur introduction dans le four. Cependant, grâce à l'efficacité des brûleurs immergés, le four peut également être alimenté en matières premières naturelles de granulométrie relativement grossière. Le four comporte de préférence des parois métalliques nues, c'est-à-dire non protégées par des matériaux réfractaires, qui sont parcourues par un système de conduites internes dans lesquelles on fait circuler un liquide de refroidissement, par exemple de l'eau. Dans un four de ce type, appelé *waterjacket,* une couche solide de matériau plus ou moins dévitrifié se forme à l'interface entre le bain liquide et les parois refroidies et protège ces dernières contre l'usure et l'oxydation. Le four comprend de préférence deux cuves en série. La première cuve, appelée cuve de fusion, est une cuve de type *waterjacket* comprenant une entrée de matières vitrifiables, une pluralité de brûleurs immergés permettant de chauffer les matières vitrifiables jusqu'à obtention d'un bain liquide et une sortie du bain liquide. L'entrée de la première cuve est avantageusement munie d'une enfourneuse telle que décrite dans WO 2013/132184.. La deuxième cuve, appelée cuve de chauffage, est également une cuve de type *waterjacket* comprenant une au moins un brûleur immergé. La deuxième cuve permet le chauffage du bain liquide à des températures suffisantes pour permettre les opérations de fibrage.

L'étape de fibrage est de préférence réalisée par centrifugation externe utilisant une cascade de roues de centrifugation alimentées en matière fondues par un dispositif de distribution, comme décrit par exemple dans les demandes EP 0465310 ou EP 0439385.

Les fibres obtenues peuvent être conditionnées en vrac ou en balles pour des applications de laines à souffler ou de laines à projeter. Dans ce dernier cas, les fibres minérales sont combinées avec un liant lors de leur application. Les fibres obtenues peuvent être également liées entre elles à l'aide d'une composition d'encollage pulvérisée à leur surface, avant d'être réceptionnées et mises en forme pour donner divers produits de laines minérales, comme des rouleaux ou des panneaux.

L'invention a également pour objet un produit d'isolation thermique et/ou comprenant des fibres minérales selon l'invention. Un tel produit peut se présente notamment sous la forme de mélanges à projeter prêt à l'emploi. Le produit d'isolation peut également être sous forme de rouleaux ou de panneaux. Un tel produit est particulièrement adapté, mais sans y être limité, à des applications pour lesquelles le produit d'isolation, et plus particulièrement les fibres minérales, reste visible. Il peut être employé par exemple dans des bâtiments, dans l'industrie ou dans des moyens de transport, notamment ferroviaire ou maritime. Plus généralement, le produit selon l'invention peut être employé pour isoler thermiquement ou acoustiquement tout type de bâtiments, tertiaires ou d'habitation (collective ou individuelle). Il peut par exemple être utilisé dans des systèmes d'isolation par l'extérieur, pour l'isolation de maisons à ossature bois, dans des panneaux sandwichs, dans des conduits de ventilation etc...

Les fibres minérales selon l'invention présentent une résistance au feu améliorée, notamment par rapport aux laines de laitier utilisées traditionnellement pour les applications en projection, tout en conservant une faible coloration. Des fibres préférées selon l'invention présentent par ailleurs une biosolubilité intéressante. Enfin, la diminution des quantités de laitier, voire l'absence de laitier, utilisé pour la fabrication des fibres selon l'invention, permet de réduire de façon significative les émissions de SOₓ de la fusion des matières premières, ce qui réduit à la fois les risques sanitaires et/ou environnementaux et les coûts de traitements liés à ces émissions.

Les exemples qui suivent illustrent l'invention de manière non-limitative.

Un mélange vitrifiable à base de basalte, de bauxite, de diabase, de dolomite et dépourvu de laitier a été fondu dans un four à brûleur immergé. Le bain fondu a été fibré par centrifugation externe pour obtenir des fibres minérales présentant une composition chimique comprenant les constituants suivants, en pourcentages pondéraux :

| | |
|---|---|
| SiO₂ | 39,7 % |
| Al₂O₃ | 15,3 % |
| CaO | 17,5 % |
| MgO | 10,6 % |
| Fe₂O₃ | 10,4 % |
| Na₂O | 3,05 % |
| K₂O | 0,92 % |
| TiO₂ | 1,69 % |
| P₂O₃ | 0,32 % |
| MnO | 0,15 % |
| SrO | 0,04 % |

et ayant un redox de 0,38.

Les fibres obtenues présentent une coloration faible et uniforme ainsi qu'une bonne résistance au feu.

## Revendications

1. Fibres minérales présentant une composition chimique comprenant les constituants suivants, en pourcentages pondéraux :
| | |
|---|---|
| SiO₂ | 30 à 50 % |
| Al₂O₃ | 10 à 17 % |
| CaO+MgO | 27,5 à 35 % |
| Na₂O+K₂O | 1 à 10 % |
**caractérisées en ce que** lesdites fibres minérales comprennent une teneur en fer total, exprimée en Fe₂O₃, de 5 à 12% et un redox, qui correspond au rapport pondéral entre la teneur en fer ferreux, exprimée en Fe₂O₃, et la teneur totale en fer, exprimée en Fe₂O₃, inférieur à 0,6, de préférence inférieur à 0,5.

2. Fibres minérales selon la revendication 1, **caractérisées en ce que** lesdites fibres minérales présentent un redox inférieur à 0,4.

3. Fibres minérales selon l'une quelconque des revendications 1 ou 2, **caractérisées en ce que** lesdites fibres minérales comprennent un rapport pondéral entre la teneur en fer ferrique, exprimée en Fe₂O₃, et la teneur en fer total, exprimée en Fe₂O₃, supérieure à 0,4, de préférence supérieure à 0,5, plus préférentiellement supérieure à 0,6.

4. Fibres minérales selon l'une quelconque des revendications 1 à 3, **caractérisées en ce que** lesdites fibres minérales comprennent une teneur en fer total, exprimée en Fe₂O₃, de 7 à 12 %, de préférence de 8 à 12 %.

5. Fibres minérales selon l'une quelconque des revendications 1 à 4, **caractérisées en ce que** lesdites fibres minérales comprennent une teneur en Al₂O₃ de 13 à 17 %.

6. Fibres minérales selon l'une quelconque des revendications 1 à 5, **caractérisées en ce que** lesdites fibres minérales comprennent une teneur en CaO+MgO de 27,5 à 31 %.

7. Fibres minérales selon l'une quelconque des revendications 1 à 6, **caractérisées en ce que** lesdites fibres minérales comprennent une teneur en Na₂O+K₂O de 3,5 à 6 %.

8. Fibres minérales selon l'une quelconque des revendications 1 à 7, **caractérisées en ce que** lesdites fibres minérales comprennent une teneur en CaO de 12 à 18 %.

9. Fibres minérales selon l'une quelconque des revendications 1 à 8, **caractérisées en ce que** lesdites fibres minérales comprennent une teneur en MgO de 7,5 à 13 %.

10. Fibres minérales selon l'une quelconque des revendications 1 à 9, **caractérisées en ce que** lesdites fibres minérales présentent une composition chimique comprenant les constituants suivants, en pourcentages pondéraux :
| | |
|---|---|
| SiO₂ | 35 à 45 % |
| Al₂O₃ | 13 à 17 % |
| CaO+MgO | 27,5 à 33% |
| Na₂O+K₂O | 1 à 6 %, de préférence 3,5 à 6% |
| TiO₂ | 0,1 à 3 % |
| Fer total (Fe₂O₃) | 7 à 12 %. |

11. Fibres minérales selon l'une quelconque des revendications 1 à 10, **caractérisées en ce que** lesdites fibres minérales présentent une composition chimique comprenant les constituants suivants, en pourcentages pondéraux :
| | |
|---|---|
| SiO₂ | 38 à 44 % |
| Al₂O₃ | 13 à 17 % |
| CaO+MgO | 27,5 à 31% |
| Na₂O+K₂O | 2 à 6 %, de préférence 3,5 à 6% |
| TiO₂ | 0,5 à 2,5 % |
| Fer total (Fe₂O₃) | 8 à 12 %. |

12. Procédé de fabrication de fibres minérales telles que définies à l'une des revendications 1 à 11, comprenant une étape de fusion d'un mélange vitrifiable possédant sensiblement la même composition chimique que celle desdites fibres minérales ; puis une étape de fibrage.

13. Procédé selon la revendication 12, **caractérisé en ce que** le mélange vitrifiable est dépourvu de laitier.

14. Procédé selon l'une quelconque des revendications 12 ou 13, **caractérisé en ce que** l'étape de fusion est mise en oeuvre dans un four à brûleurs immergés.

15. Produit d'isolation thermique et/ou acoustique comprenant des fibres minérales telles que définies aux revendications 1 à 11.

## Patentansprüche

1. Mineralfasern, die eine chemische Zusammensetzung vorweisen, umfassend die folgenden Bestandteile in Gewichtsprozent:
| | |
|---|---|
| SiO₂ | 30 bis 50 % |
| Al₂O₃ | 10 bis 17 % |
| CaO+MgO | 27,5 bis 35 % |
| Na₂O+ K₂O | 1 bis 10 % |
**dadurch gekennzeichnet, dass** die Mineralfasern einen Gesamteisengehalt, ausgedrückt als Fe₂O₃, von 5 bis 12 % und einen Redoxwert, der dem Gewichtsverhältnis zwischen dem an Eisen(II)-Gehalt, ausgedrückt als Fe₂O₃, und dem Gesamteisengehalt, ausgedrückt als Fe₂O₃, entspricht, von weniger als 0,6, vorzugsweise weniger als 0,5, umfassen.

2. Mineralfasern nach Anspruch 1, **dadurch gekennzeichnet, dass** die Mineralfasern einen Redoxwert von weniger als 0,4 aufweisen.

3. Mineralfasern nach einem der Ansprüche 1 oder 2,
**dadurch gekennzeichnet, dass** die Mineralfasern ein Gewichtsverhältnis zwischen dem Eisen(III)-Gehalt, ausgedrückt als Fe₂O₃, und dem Gesamteisengehalt, ausgedrückt als Fe₂O₃ von mehr als 0,4, vorzugsweise mehr als 0,5, mehr bevorzugt mehr als 0,6, umfassen.

4. Mineralfasern nach einem der Ansprüche 1 bis 3,
**dadurch gekennzeichnet, dass** die Mineralfasern einen Gesamteisengehalt, ausgedrückt als Fe₂O₃, von 7 bis 12 %, vorzugsweise von 8 bis 12 %, umfassen.

5. Mineralfasern nach einem der Ansprüche 1 bis 4,
**dadurch gekennzeichnet, dass** die Mineralfasern einen Al₂O₃-Gehalt von 13 bis 17 % umfassen.

6. Mineralfasern nach einem der Ansprüche 1 bis 5,
**dadurch gekennzeichnet, dass** die Mineralfasern einen CaO+MgO-Gehalt von 27,5 bis 31 % umfassen.

7. Mineralfasern nach einem der Ansprüche 1 bis 6,
**dadurch gekennzeichnet, dass** die Mineralfasern einen Na₂O+K₂O-Gehalt von 3,5 bis 6 % umfassen.

8. Mineralfasern nach einem der Ansprüche 1 bis 7,
**dadurch gekennzeichnet, dass** die Mineralfasern einen CaO-Gehalt von 12 bis 18 % umfassen.

9. Mineralfasern nach einem der Ansprüche 1 bis 8,
**dadurch gekennzeichnet, dass** die Mineralfasern einen MgO-Gehalt von 7,5 bis 13 % umfassen.

10. Mineralfasern nach einem der Ansprüche 1 bis 9,
**dadurch gekennzeichnet, dass** die Mineralfasern eine chemische Zusammensetzung aufweisen, umfassend die folgenden Bestandteile in Gewichtsprozent:
| | |
|---|---|
| SiO₂ | 35 bis 45 % |
| Al₂O₃ | 13 bis 17 % |
| CaO+MgO | 27,5 bis 33 % |
| Na₂O+ K₂O | 1 bis 6 %, vorzugsweise 3,5 bis 6 % |
| TiO₂ | 0, 1 bis 3 % |
| Gesamteisen (Fe₂O₃) | 7 bis 12 %. |

11. Mineralfasern nach einem der Ansprüche 1 bis 10,
**dadurch gekennzeichnet, dass** die Mineralfasern eine chemische Zusammensetzung aufweisen, umfassend die folgenden Bestandteile in Gewichtsprozent:
| | |
|---|---|
| SiO₂ | 38 bis 44 % |
| Al₂O₃ | 13 bis 17 % |
| CaO+MgO | 27,5 bis 31 % |
| Na₂O+ K₂O | 2 bis 6 %, vorzugsweise 3,5 bis 6 % |
| TiO₂ | 0,5 bis 2,5 % |
| Gesamteisen (Fe₂O₃) | 8 bis 12 %. |

12. Verfahren zum Herstellen von Mineralfasern wie in einem der Ansprüche 1 bis 11 definiert, umfassend einen Schmelzschritt einer verglasbaren Mischung, die im Wesentlichen die gleiche chemische Zusammensetzung wie diejenige der Mineralfasern besitzt; anschließend einen Zerfaserungsschritt.

13. Verfahren nach Anspruch 12, **dadurch gekennzeichnet, dass** die verglasbare Mischung frei von Schlacke ist.

14. Verfahren nach einem der Ansprüche 12 oder 13,
**dadurch gekennzeichnet, dass** der Schmelzschritt in einem Ofen mit Tauchbrennern durchgeführt wird.

15. Wärme- und/oder Schalldämmungsprodukt, umfassend Mineralfasern wie in den Ansprüchen 1 bis 11 definiert.

## Claims

1. Mineral fibers having a chemical composition comprising the following constituents, as weight percentages:
| | |
|---|---|
| SiO₂ | 30% to 50% |
| Al₂O₃ | 10% to 17% |
| CaO+MgO | 27.5% to 35% |
| Na₂O+K₂O | 1% to 10% |
**characterized in that** said mineral fibers comprise a content of total iron, expressed as Fe₂O₃, of from 5% to 12% and a redox, which corresponds to the weight ratio between the content of ferrous iron, expressed as Fe₂O₃, and the total content of iron, expressed as Fe₂O₃, of less than 0.6, preferably of less than 0.5.

2. The mineral fibers as claimed in claim 1, **characterized in that** said mineral fibers have a redox of less than 0.4.

3. The mineral fibers as claimed in either one of claims 1 and 2, **characterized in that** said mineral fibers comprise a weight ratio between the content of ferric iron, expressed as Fe₂O₃, and the content of total iron, expressed as Fe₂O₃, of greater than 0.4, preferably greater than 0.5, more preferentially greater than 0.6.

4. The mineral fibers as claimed in any one of claims 1 to 3, **characterized in that** said mineral fibers comprise a content of total iron, expressed as Fe₂O₃, of from 7% to 12%, preferably from 8% to 12%.

5. The mineral fibers as claimed in any one of claims 1 to 4, **characterized in that** said mineral fibers comprise a content of Al₂O₃ of from 13% to 17%.

6. The mineral fibers as claimed in any one of claims 1 to 5, **characterized in that** said mineral fibers comprise a content of CaO+MgO of from 27.5% to 31%.

7. The mineral fibers as claimed in any one of claims 1 to 6, **characterized in that** said mineral fibers comprise a content of Na₂O+K₂O of from 3.5% to 6%.

8. The mineral fibers as claimed in any one of claims 1 to 7, **characterized in that** said mineral fibers comprise a content of CaO of from 12% to 18%.

9. The mineral fibers as claimed in any one of claims 1 to 8, **characterized in that** said mineral fibers comprise a content of MgO of from 7.5% to 13%.

10. The mineral fibers as claimed in any one of claims 1 to 9, **characterized in that** the mineral fibers have a chemical composition comprising the following constituents, as weight percentages:
| | |
|---|---|
| SiO₂ | 35% to 45% |
| Al₂O₃ | 13% to 17% |
| CaO+MgO | 27.5% to 35% |
| Na₂O+K₂O | 1% to 6, preferably 3.5 to 6% |
| TiO₂ | 0.1 to 3% |
| Total iron (Fe₂O₃) | 7 to 12%. |

11. The mineral fibers as claimed in any one of claims 1 to 10, **characterized in that** the mineral fibers have a chemical composition comprising the following constituents, as weight percentages:
| | |
|---|---|
| SiO₂ | 38% to 44% |
| Al₂O₃ | 13% to 17% |
| CaO+MgO | 27.5% to 31% |
| Na₂O+K₂O | 2% to 6, preferably 3.5 to 6% |
| TiO₂ | 0.5 to 2.5% |
| Total iron (Fe₂O₃) | 8 to 12%. |

12. A process for manufacturing mineral fibers as defined in one of claims 1 to 11, comprising a step of melting a batch mix having substantially the same chemical composition as that of said mineral fibers; then a step of fiberizing.

13. The process as claimed in claim 12, **characterized in that** the batch mix is devoid of slag.

14. The process as claimed in either one of claims 12 and 13, **characterized in that** the melting step is carried out in a submerged-burner furnace.

15. A thermal and/or acoustic insulation product comprising mineral fibers as defined in claims 1 to 11.
